# EUROPÄISCHE PATENTSCHRIFT

(11) **EP 3 775 790 B1**
(45) Veröffentlichungstag und Bekanntmachung des Hinweises auf die Patenterteilung: **10.08.2022**
(21) Anmeldenummer: 19706525.3
(22) Anmeldetag: 18.02.2019
(51) Int. Cl.: G01F 23/284, G01F 1/002, G01F 1/58

(54) **VORRICHTUNG ZUR BESTIMMUNG EINES FÜLLSTANDS EINER FLÜSSIGKEIT IN EINEM MESSROHR, UND DURCHFLUSSMESSGERÄT MIT EINER SOLCHEN VORRICHTUNG**
DEVICE FOR DETECTING THE LEVEL OF A LIQUID IN A MEASURING PIPE AND FLOW METER WITH SUCH A DEVICE
DISPOSITIF DE DÉTECTER DU NIVEAU D'UN LIQUIDE DANS UN TUYAU DE MESURE ET DÉBITMÈTRE AVEC UN TEL DISPOSITIF

(30) Priorität: 28.03.2018 DE 102018107450
(43) Veröffentlichungstag der Anmeldung: 17.02.2021
(73) Patentinhaber: Endress + Hauser Flowtec AG, 4153 Reinach (CH)
(72) Erfinder: PFLÜGER, Stefan, 81379 München (DE); MAYER, Winfried, 89290 Buch (DE)
(74) Vertreter: Andres, Angelika Maria
(86) Internationale Anmeldenummer: PCT/EP2019/053935
(87) Internationale Veröffentlichungsnummer: WO 2019/185240

(56) Entgegenhaltungen:
- WO-A1-2007/046752
- CN-U- 202 041 237
- DE-A1-102007 061 573
- DE-A1-102010 024 680
- DE-B3-102004 057 087

## Beschreibung

Die vorliegende Erfindung betrifft eine Vorrichtung zum Bestimmen des Füllstands einer Flüssigkeit in einer Rohrleitung und ein Durchflussmessgerät mit einer solchen Vorrichtung.

In unterschiedlichen Anwendungsfeldern der Durchflussmessung existieren Applikationen, in denen Rohrleitungen nicht vollständig gefüllt sind, z.B. im Bereich Wasser-/Abwassertechnik. Auch in diesen Rohrleitungen kann die Fließgeschwindigkeit des Fluids mit dem magnetisch-induktiven Messprinzip oder vergleichbaren Verfahren gemessen werden. Um jedoch von einer gemessenen Durchflussgeschwindigkeit auf einen Volumenfluss rückzurechnen, ist zusätzlich eine Information über den Füllstand in der Rohrleitung notwendig. Magnetisch-induktive Durchflussmessgeräte mit einer Überwachungselektrode zur Überwachung eines Befüllungsgrads der Rohrleitung sind in den Offenlegungsschriften DE 10 2010 001 993 A1 und DE 10 2012 109 308 A1 offenbart. Mit den Überwachungselektroden kann aber nur bestimmt werden, ob eine Rohrleitung im Wesentlichen vollständig gefüllt ist. Eine kontinuierliche, quantitative Bestimmung des Befüllungsgrades ist mit den Überwachungselektroden nicht möglich.

Weiterhin offenbart die Offenlegungsschrift WO 2007/046752 A1 eine Vorrichtung zur Messung des Füllstands einer Flüssigkeit in einem Tank, wobei in den Tank von oben ein isolierter Mikrowellenleiter zur Füllstandsmessung in den Tank eingeführt wird.

Es ist daher die Aufgabe der vorliegenden Erfindung, hier Abhilfe zu schaffen.

Die Aufgabe wird erfindungsgemäß gelöst durch die Vorrichtung gemäß dem unabhängigen Patentanspruch 1. Die erfindungsgemäße Vorrichtung zur Messung des Füllstands einer Flüssigkeit umfasst: ein Messrohr zum Führen der Flüssigkeit, welches eine Rohrwand aufweist, die sich zwischen einer ersten stirnseitigen Rohröffnung und einer zweiten stirnseitigen Rohröffnung erstreckt und ein Volumen umschließt in dem die Flüssigkeit zu führen ist, wobei sich zwischen der ersten Rohröffnung und der zweiten Rohröffnung eine Rohrachse erstreckt; einen ersten Leiter der zumindest abschnittsweise um das Volumen verläuft, in dem die Flüssigkeit zu führen ist, wobei der erste Leiter gegenüber dem Volumen elektrisch isoliert ist; einen zweiten Leiter der zumindest abschnittsweise um das Volumen verläuft, in dem die Flüssigkeit zu führen ist, wobei der zweite Leiter gegenüber dem ersten Leiter und gegenüber dem Volumen elektrisch isoliert ist, wobei der erste Leiter im Wesentlichen parallel zum zweiten Leiter verläuft, wobei der erste Leiter und der zweite Leiter einen Wellenleiter für Mikrowellen bilden; eine HF-Schaltung zum Einkoppeln eines Mikrowellensignals in den Wellenleiter und zum Empfangen von aus dem Wellenleiter ausgekoppelten, reflektierten Mikrowellensignalen; eine Betriebs- und Auswerteschaltung, die dazu eingerichtet ist, anhand von empfangenen Mikrowellensignalen, den Füllstand der Flüssigkeit in dem Messrohr zu bestimmen.

In einer Weiterbildung der Erfindung weist die Rohrwand einen metallischen Stützkörper und eine elektrisch isolierende Auskleidung auf, wobei der Stützkörper den ersten Leiter umgibt, und wobei der erste elektrische Leiter durch die Auskleidung gegenüber dem Volumen und gegenüber dem Stützkörper elektrisch isoliert ist.

In einer Weiterbildung der Erfindung umgibt der Stützkörper den zweiten Leiter, wobei der zweite elektrische Leiter durch die Auskleidung gegenüber dem ersten Leiter, dem Volumen und gegenüber dem Stützkörper elektrisch isoliert ist.

In einer Weiterbildung der Erfindung umfasst der zweite Leiter den Stützkörper und wird insbesondere durch den Stützkörper gebildet.

In einer Weiterbildung der Erfindung umfasst die Rohrwand einen elektrisch isolierenden Rohrwandkörper, wobei der Wellenleiter den Rohrwandkörper umgibt, und durch den Rohrwandkörper gegenüber dem Volumen elektrisch isoliert ist.

In einer Weiterbildung der Erfindung sind der erste Leiter und der zweite Leiter, an dem Rohrwandkörper angebracht.

In einer Weiterbildung der Erfindung umfassen der erste Leiter und der zweite Leiter metallische Streifen, die auf dem Rohrwandkörper aufgebracht sind.

In einer Weiterbildung der Erfindung verläuft der Wellenleiter im Wesentlichen senkrecht zur Rohrachse.

In einer Weiterbildung der Erfindung verläuft der Wellenleiter im Wesentlichen spiralförmig um das Volumen.

In einer Weiterbildung der Erfindung ist die Betriebs- und Auswerteschaltung dazu eingerichtet, den Füllstand der Flüssigkeit in dem Messrohr anhand eines oder mehrerer aus dem Wellenleiter ausgekoppelter, reflektierter Signale zu bestimmen.

In einer Weiterbildung der Erfindung ist die HF-Schaltung dazu eingerichtet, Signale nach dem FMCW-Prinzip in den Wellenleiter einzukoppeln und aus dem Wellenleiter auszukoppeln.

Das erfindungsgemäße Durchflussmessgerät, umfasst eine erfindungsgemäße Vorrichtung zur Messung des Füllstands; und einen Messwandler zum Erfassen der Strömungsgeschwindigkeit einer in dem Messrohr strömenden Flüssigkeit, wobei der Messwandler in bzw. an dem Messrohr angeordnet ist; und wobei die Betriebs- und Auswerteschaltung dazu eingerichtet ist, anhand der Strömungsgeschwindigkeit und des Füllstands den Volumendurchfluss durch das Messrohr zu ermitteln.

In einer Weiterbildung der Erfindung umfasst der Messwandler einen magnetisch induktiven Messwandler.

In einer Weiterbildung der Erfindung ist die Betriebs- und Auswerteschaltung dazu eingerichtet, anhand von aus dem Wellenleiter ausgekoppelten Signalen elektrische bzw. dielektrische Eigenschaften der Flüssigkeit zu bestimmen, und letztere bei der Bestimmung der Strömungsgeschwindigkeit der Flüssigkeit zu berücksichtigen.

Die Erfindung wird nun anhand der in den Zeichnungen dargestellten Ausführungsbeispiele erläutert. Es zeigt:
Fig. 1a: einen ersten Querschnitt durch ein Messrohr eines Ausführungsbeispiels einer erfindungsgemäßen Vorrichtung zur Messung des Füllstands einer Flüssigkeit in dem Messrohr;
Fig. 1b: einen vom ersten Querschnitt in Fig. 1 a axial beabstandeten zweiten Querschnitt durch das Messrohr, wobei in dem zweiten Messrohrquerschnitt Komponenten zur Durchflussmessung angeordnet sind;
Fig. 2a: ein Detail eines Längsschnitts durch eine Messrohrwand eines ersten Ausführungsbeispiels einer erfindungsgemäßen Vorrichtung zur Messung des Füllstands einer Flüssigkeit in dem Messrohr;
Fig. 2b: ein Detail eines Längsschnitts durch eine Messrohrwand eines zweiten Ausführungsbeispiels einer erfindungsgemäßen Vorrichtung zur Messung des Füllstands einer Flüssigkeit in dem Messrohr; und
Fig. 2c: ein Detail eines Längsschnitts durch eine Messrohrwand eines zweiten Ausführungsbeispiels einer erfindungsgemäßen Vorrichtung zur Messung des Füllstands einer Flüssigkeit in dem Messrohr.

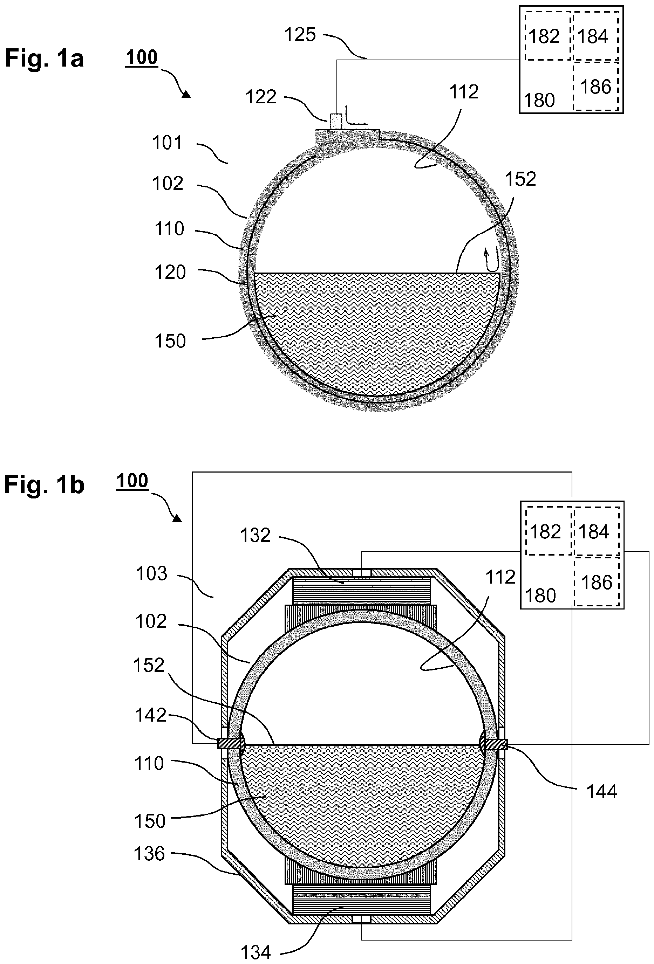

Die in Fig. 1a dargestellte Vorrichtung 101 zur Messung des Füllstands einer Flüssigkeit in einem im Wesentlichen horizontal verlaufenden Messrohr 102 umfasst eine Messrohrwand 110, die hier einen elektrisch isolierenden Werkstoff aufweist, beispielsweise einen keramischen Werkstoff, Glas oder ein Polymer wie PEEK, Polyamid, PVC. Die Vorrichtung umfasst weiterhin eine Leiterstruktur 120, mit mindestens zwei im Wesentlichen parallel verlaufenden elektrischen Leitern die gegeneinander und gegenüber dem Volumen 112 des Messrohrs elektrisch isoliert sind und in der Querschnittebene oder parallel dazu um das Volumen 112 des Messrohrs 102 nahezu vollständig herum geführt sind. Die Leiter können insbesondere metallische Bänder umfassen, beispielsweise Kupferbänder umfassen, die insbesondere in den Kunststoff der Messrohrwand 110 eingebettet sind. Ein erstes Ende der Leiterstruktur 120 ist am nahe dem oberen Scheitelpunkt des Messrohrs 102 angeordnet, wobei dort eine Koaxialanschlussbuchse 122 an die Leiterstruktur angeschlossen ist, um eine Mikrowellensignalleitung 125 mit der Leiterstruktur koppeln zu können. Wenn Mikrowellen in die Leiterstruktur 120 eingekoppelt werden, wechselwirken diese mit den im Volumen 112 des Messrohrs enthaltenen Medien. Bei einer Teilfüllung des Volumens 112 mit einem wässrigen Medium 150, tritt an der Oberfläche 152 des wässrigen Mediums 150 ein Impedanzsprung auf, so dass dort eine in die Leiterstruktur eingekoppelte Mikrowelle teilreflektiert wird. Die Mikrowellensignalleitung 125 ist an eine Elektronikeinheit 180 angeschlossen, die einerseits eine HF-Schaltung 182 zum Erzeugen von Mikrowellensignalen und eine Betriebs- und Auswerteschaltung 184 umfasst, welche dazu eingerichtet ist anhand der Laufzeit der teilreflektierten Mikrowellensignale den Füllstand eines Mediums in dem Messrohr zu bestimmen. Die HF-Schaltung kann insbesondere dazu eingerichtet sein, ein FMCW-Signal zu erzeugen, wobei der Füllstand, dann anhand von Laufzeitabhängigen Frequenzdifferenzen zwischen einem aktuell emittierten Signal und einem empfangenen, reflektierten Signal zu bestimmen ist.

Um die Vorrichtung für den Messbetrieb vorzubereiten, können beispielsweise die folgendermaßen vorgegangen werden:
Zunächst wird eine Leer-Messung am vollständig mit Luft gefüllten Messrohr 102 durchgeführt. Die hierbei auftretenden Reflexions-Signale sind nicht durch eine Reflexion am Füllstand verursacht. Das Ergebnis dieser Leer-Messung wird im Frequenzbereich abgespeichert als *s*_{11,*leer*}(*f*).

Anschließend wird eine Voll-Messung am vollständig mit Wasser gefüllten Messrohr 102 durchgeführt. Das reflektierte Signal wird erfasst und als *s*_{11,*voll*}(*f*) gespeichert.

Nach einer Transformation von *s*₁₁(*f*) vom Frequenzbereich zu *s*₁₁(*t*) im Zeitbereich durch Fourier-Transformation, werden unerwünschte Reflexions-Signale durch Bildung der komplexwertigen Differenz zwischen *s*₁₁(*f*) und *s*_{11,*leer*}(*f*) entfernt.

Schließlich wird die zeitliche Position der füllstandsabhängigen Reflektion für den maximal gefüllten Fall ermittelt. Damit sind die Voraussetzungen für die Messung des Füllstands geschaffen.

Im Messbetrieb werden nach dem Erfassen der Reflexion *s*₁₁(*f*) zunächst unerwünschter Reflexions-Signale mittels Bildung der komplexwertigen Differenz zwischen *s*₁₁(*f*) und *s*_{11,*leer*}(*f*) beseitigt. Es folgt die Transformation von *s*₁₁(*f*) vom Frequenzbereich zu *s*₁₁(*t*) in den Zeitbereich durch Fourier-Transformation. Anschließend wird die zeitliche Position der füllstandsabhängigen Reflexion, relativ zur Position der Messung beim vollen Messrohr 102 ermittelt, und in Abhängigkeit von der zeitlichen Position wird in einen Füllstand berechnet. Dieser Füllstand kann zur Berechnung eines Volumendurchflusses herangezogen werden.

Fig. 1b zeigt einen axial versetzten Querschnitt durch das Messrohr 102 aus Fig. 1a. Dieser Querschnitt schneidet Komponenten zur Volumendurchflussmessung mittels des magnetisch-induktiven Messprinzips. Zum Erzeugen eines das Messrohr 102 im Wesentlichen senkrecht zur Messrohrachse durchsetzenden Magnetfelds weist die Vorrichtung 100 zwei Feldspulen 132, 134 mit am Messrohr 102 anliegenden Polschuhen auf, die einander gegenüberliegend oberhalb und unterhalb des Messrohrs 102 angeordnet sind. Ein Feldrückführblech 136 koppelt die dem Messrohr abgewandten rückseitigen Stirnflächen der Feldspulen 136 miteinander. Auf einem horizontal verlaufenden Durchmesser sind einander gegenüberliegend zwei Messelektroden 142, 144 angeordnet, die dazu eingerichtet sind eine geschwindigkeitsabhängige und magnetfeldabhängige induzierte Messspannung U = v x B zu erfassen, solange die Messelektroden 142, 144 von einem in dem Messrohr 102 befindlichen, leitfähigen Medium 150 kontaktiert sind. Die Feldspulen 132, 134 und die Messelektroden 142, 144 sind Ebenfalls an die Elektronikeinheit 180 angeschlossen, welche weiterhin einer Versorgungseinheit 186 aufweist, die dazu eingerichtet ist, die Feldspulen 132, 134 mit einem alternierenden Spulenstrom zu speisen. Die Betriebs- und Auswerteschaltung 184 ist weiterhin dazu eingerichtet, die an den Messelektroden 142, 144 anliegende Messspannung zu erfassen und auf dieser Basis eine Strömungsgeschwindigkeit zu ermitteln, sowie auf Basis der Strömungsgeschwindigkeit und des ermittelten Füllstands im Messrohr 102 einen Wert für den Volumendurchfluss zu bestimmen.

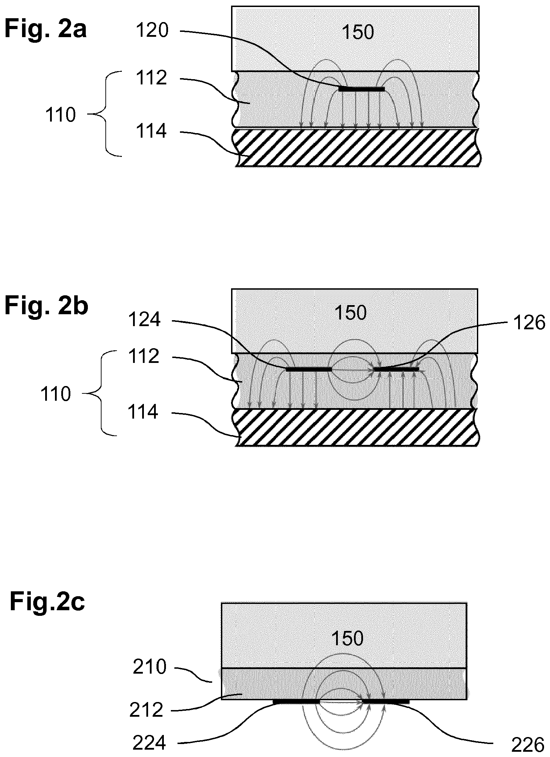

In Fign. 2a bis 2c, sind Detaillängsschnitte durch die Messrohrwand 110 verschiedener Ausführungsformen der erfindungsgemäßen Vorrichtung dargestellt, wobei die Leiteranordnungen jeweils senkrecht durch diese Längsschnitte verlaufen. Die Messrohrachse verläuft jeweils in der Ebene der Längsschnitte.

Die in Fig. 2a dargestellte Messrohrwand umfasst einen metallischen Stützkörper 114, welcher beispielsweise in einem Feingussverfahren hergestellt ist. Der Stützkörper 114 ist an seiner Innenseite mit einer elektrisch isolierenden und mediendichten Auskleidung 112 beschichtet, die einen Kunststoff, beispielsweise Polyurethan aufweist. In die Auskleidung 112 ist ein bandförmiger metallischer Leiter, beispielsweise ein Kupferband 120 eingebettet, welches in der Auskleidung um das Volumen des Messrohrs herum verläuft und mit dem Stützkörper 114 einen Wellenleiter bildet, der mit einem Mikrowellensignal beaufschlagbar ist, das zwischen dem Kupferband 120 und dem Stützkörper 114 geführt ist. Wie durch die Feldlinien in der Zeichnung angedeutet, wechselwirkt das Mikrowellensignal auch mit einem im Volumen des Messrohrs befindlichen Medium 150, so dass es an Oberflächen des Mediums 150, die mit sprunghaften Veränderungen der Dielektrizitätskonstanten einhergehen, zu einer (Teil-)Reflektion des Mikrowellensignals kommt.

Die in Fig. 2b dargestellte Messrohrwand 110 umfasst ebenfalls einen metallischen Stützkörper 114, welcher beispielsweise in einem Feingussverfahren hergestellt ist. Der Stützkörper 114 ist an seiner Innenseite mit einer elektrisch isolierenden und mediendichten Auskleidung 112 beschichtet, die einen Kunststoff, beispielsweise Polyurethan aufweist. In der Auskleidung 112 sind zwei parallel verlaufende bandförmige metallische Leiter, beispielsweise als Kupferbänder 124,126 eingebettet, welche zueinander parallel in der Auskleidung 112 um das Volumen des Messrohrs herum verlaufen und einen Wellenleiter bilden, der mit einem Mikrowellensignal beaufschlagbar ist, das insbesondere zwischen den beiden Kupferbändern 124, 126 geführt ist. Wie durch die Feldlinien in der Zeichnung angedeutet, wechselwirkt das Mikrowellensignal auch mit einem im Volumen des Messrohrs befindlichen Medium 150, so dass es an Oberflächen des Mediums 150, die mit sprunghaften Veränderungen der Dielektrizitätskonstanten einhergehen, zu einer (Teil-)Reflektion des Mikrowellensignals kommt. Im Vergleich zur Darstellung aus Fig. 2a ist hier die Wechselwirkung mit dem Medium 150 stärker, so dass die Teilreflektion ausgeprägter ist.

Die in Fig. 2c dargestellte Messrohrwand 210 weist einen elektrisch isolierenden Rohrwandkörper 212 aus Kunststoff auf, beispielsweise Polyamid, PVC, PEEK oder PES, der ggf. faserverstärkt ist. An der Außenseite des Rohrwandkörpers 212 sind zwei parallel verlaufende bandförmige metallische Leiter, beispielsweise als Kupferbänder 224, 226 angeordnet, welche um das Volumen des Messrohrs herum verlaufen und mit einem Mikrowellensignal beaufschlagbar sind, das zwischen den beiden Kupferbändern 224, 226 geführt ist. Wie durch die Feldlinien in der Zeichnung angedeutet, wechselwirkt das Mikrowellensignal auch mit einem im Volumen des Messrohrs befindlichen Medium 150, so dass es an Oberflächen des Mediums 150, die mit sprunghaften Veränderungen der Dielektrizitätskonstanten einhergehen, zu einer (Teil-)Reflektion des Mikrowellensignals kommt.

Die obigen Beispiele zeigen, dass beliebige um das Volumen des Messrohrs herum geführte Leiteranordnungen geeignet sind, ein Mikrowellensignal zu führen, welches mit einem im Volumen des Messrohrs befindlichen Medium wechselwirkt, und damit Oberflächen des Mediums anhand von Teilreflektionen des Mikrowellensignals detektierbar zu machen.

Im Ergebnis kann damit der Füllstand in einem Messrohr ermittelt werden um auch bei teilgefüllten Messrohren einen korrekten Volumendurchflussmesswert angegeben zu können.

## Patentansprüche

1. Vorrichtung (101) zur Messung des Füllstands einer Flüssigkeit, umfassend:
ein Messrohr (102; 202) zum Führen der Flüssigkeit (150), welches eine Rohrwand (110) aufweist, die sich zwischen einer ersten stirnseitigen Rohröffnung und einer zweiten stirnseitigen Rohröffnung erstreckt und ein Volumen umschließt in dem die Flüssigkeit zu führen ist, wobei sich zwischen der ersten Rohröffnung und der zweiten Rohröffnung eine Rohrachse erstreckt;
einen ersten Leiter (120; 126; 226) der zumindest abschnittsweise um das Volumen verläuft, in dem die Flüssigkeit zu führen ist, wobei der erste Leiter gegenüber dem Volumen elektrisch isoliert ist;
einen zweiten Leiter (114; 124; 224) der zumindest abschnittsweise um das Volumen verläuft, in dem die Flüssigkeit (150) zu führen ist, wobei der zweite Leiter gegenüber dem ersten Leiter und gegenüber dem Volumen elektrisch isoliert ist, wobei der erste Leiter (120; 126; 226) im Wesentlichen parallel zum zweiten Leiter (114; 124; 224) verläuft, wobei der erste Leiter (120; 126; 226) und der zweite Leiter (114; 124; 224) einen Wellenleiter für Mikrowellen bilden;
eine HF-Schaltung (182) zum Einkoppeln eines Mikrowellensignals in den Wellenleiter und zum Empfangen von aus dem Wellenleiter ausgekoppelten, reflektierten Mikrowellensignalen;
eine Betriebs- und Auswerteschaltung (184), die dazu eingerichtet ist, anhand der empfangenen Mikrowellensignale, den Füllstand der Flüssigkeit in dem Messrohr (102; 202) zu bestimmen.

2. Vorrichtung nach Anspruch 1, wobei die Rohrwand (110) einen metallischen Stützkörper (114) und eine elektrisch isolierende Auskleidung (112) aufweist, wobei der Stützkörper (114) den ersten Leiter (120; 126) umgibt, und wobei der erste elektrische Leiter (120; 126) durch die Auskleidung (112) gegenüber dem Volumen und gegenüber dem Stützkörper (114) elektrisch isoliert ist.

3. Vorrichtung nach Anspruch 2, wobei der Stützkörper (114) den zweiten Leiter (124) umgibt, und wobei der zweite elektrische Leiter (124) durch die Auskleidung (112) gegenüber dem ersten Leiter (126), dem Volumen und gegenüber dem Stützkörper (114) elektrisch isoliert ist.

4. Vorrichtung nach Anspruch 2, wobei der zweite Leiter den Stützkörper (114) umfasst, insbesondere durch den Stützkörper (114) gebildet wird.

5. Vorrichtung nach Anspruch 1, wobei die Rohrwand einen elektrisch isolierenden Rohrwandkörper (210) umfasst wobei der Wellenleiter den Rohrwandkörper umgibt, und durch den Rohrwandkörper (210) gegenüber dem Volumen elektrisch isoliert ist.

6. Vorrichtung nach Anspruch 5, wobei der erste Leiter (226) und der zweite Leiter (224), an dem Rohrwandkörper (210) angebracht sind.

7. Vorrichtung nach Anspruch 6, wobei der erste Leiter (226) und der zweite Leiter (224) metallische Streifen umfassen, die auf dem Rohrwandkörper (210) aufgebracht sind.

8. Vorrichtung nach einem der vorhergehenden Ansprüche, wobei der Wellenleiter im Wesentlichen senkrecht zur Rohrachse verläuft.

9. Vorrichtung nach einem der Ansprüche 1 bis 7, wobei der Wellenleiter spiralförmig um das Volumen verläuft.

10. Vorrichtung nach einem der vorhergehenden Ansprüche, wobei die Betriebs- und Auswerteschaltung (184) dazu eingerichtet ist, den Füllstand der Flüssigkeit in dem Messrohr anhand eines oder Mehrerer aus dem Wellenleiter ausgekoppelter reflektierter Signale zu bestimmen.

11. Vorrichtung nach einem der vorhergehenden Ansprüche, wobei die HF-Schaltung dazu eingerichtet ist, Signale nach dem FMCW-Prinzip in den Wellenleiter einzukoppeln und aus dem Wellenleiter auszukoppeln.

12. Durchflussmessgerät (100), umfassend:
eine Vorrichtung (101) zur Messung des Füllstands nach einem der Ansprüche 1 bis 11; einen Messwandler (103) zum Erfassen der Strömungsgeschwindigkeit einer in dem Messrohr (102) strömenden Flüssigkeit, wobei der Messwandler (103) in bzw. an dem Messrohr (102) angeordnet ist; und
wobei die Betriebs- und Auswerteschaltung (184) dazu eingerichtet ist, anhand der Strömungsgeschwindigkeit und des Füllstands den Volumendurchfluss durch das Messrohr (102) zu ermitteln.

13. Durchflussmessgerät nach Anspruch 12, wobei der Messwandler (103) einen magnetisch-induktiven Messwandler umfasst.

14. Durchflussmessgerät nach Anspruch 12, wobei die Betriebs- und Auswerteschaltung (184) dazu eingerichtet ist, anhand von aus dem Wellenleiter ausgekoppelten Signalen elektrische bzw. dielektrische Eigenschaften der Flüssigkeit zu bestimmen, und letztere bei der Bestimmung der Strömungsgeschwindigkeit der Flüssigkeit zu berücksichtigen.

## Claims

1. Apparatus (101) designed to measure the level of a liquid, said apparatus comprising:
a measuring tube (102, 202) designed to conduct the liquid (150), which has a tube wall (110) which runs between a first tube opening at the front face and a second tube opening at the front face and which surrounds a volume in which the liquid is to be conducted, wherein a tube axis extends between the first tube opening and the second tube opening;
a first conductor (120, 126, 226) which extends at least in sections around the volume in which the liquid is to be conducted, wherein the first conductor is electrically isolated in relation to the volume;
a second conductor (114, 124, 224) which extends at least in sections around the volume in which the liquid (150) is to be conducted, wherein the second conductor is electrically isolated in relation to the first conductor and in relation to the volume,
wherein the first conductor (120, 126, 226) extends essentially parallel to the second conductor (114, 124, 224), wherein the first conductor (120, 126, 226) and the second conductor (114, 124, 224) form a waveguide for microwaves;
a HF circuit (182) designed to couple a microwave signal into the waveguide and to receive reflected microwave signals which are decoupled from the waveguide; an operating and evaluation circuit (184), which is designed to determine the level of the liquid in the measuring tube (102, 202) using the microwave signals received.

2. Apparatus as claimed in Claim 1, wherein the tube wall (110) comprises a metal support body (114) and an electrically isolating liner (112), wherein the support body (114) surrounds the first conductor (120, 126) and wherein the first electrical conductor (120, 126) is electrically isolated in relation to the volume and in relation to the support body (114) by the liner (112).

3. Apparatus as claimed in Claim 2, wherein the support body (114) surrounds the second conductor (124), and wherein the second electrical conductor (124) is electrically isolated in relation to the first conductor (126), the volume and the support body (114) by the liner (112).

4. Apparatus as claimed in Claim 2, wherein the second conductor comprises the support body (114), particularly formed by the support body (114).

5. Apparatus as claimed in Claim 1, wherein the tube wall comprises an electrically isolating tube wall body (210), wherein the waveguide surrounds the tube wall body and is electrically isolated in relation to the volume by the tube wall body (210).

6. Apparatus as claimed in Claim 5, wherein the first conductor (226) and the second conductor (224) are fixed on the tube wall body (210).

7. Apparatus as claimed in Claim 6, wherein the first conductor (226) and the second conductor (224) comprise metal strips that are applied on the tube wall body (210).

8. Apparatus as claimed in one of the previous claims, wherein the waveguide is essentially perpendicular to the tube axis.

9. Apparatus as claimed in one of the Claims 1 to 7, wherein the waveguide extends around the volume in a spiral.

10. Apparatus as claimed in one of the previous claims, wherein the operating and evaluation circuit (184) is designed to determine the level of the liquid in the measuring tube using one or more of the signals reflected and decoupled from the waveguide.

11. Apparatus as claimed in one of the previous claims, wherein the HF circuit is designed to couple signals into the waveguide and decouple them from the waveguide according to the FMCW principle.

12. Flowmeter (100), comprising:
An apparatus (101) designed to measure the level as claimed in one of the Claims 1 to 11; a transducer (103) designed to measure the flow velocity of a liquid flowing in the measuring tube (102), wherein the transducer (103) is arranged on or in the measuring tube (102); and
wherein the operating and evaluation circuit (184) is designed to determine the volume flow through the measuring tube (102) on the basis of the flow velocity and the level.

13. Flowmeter as claimed in Claim 12, wherein the transducer (103) comprises an electromagnetic transducer.

14. Flowmeter as claimed in Claim 12, wherein the operating and evaluation circuit (184) is designed to determine electric or dielectric properties of the liquid using signals decoupled from the waveguide, and to take the latter into consideration when determining the flow velocity of the liquid.

## Revendications

1. Dispositif (101) destiné à la mesure du niveau d'un liquide, lequel dispositif comprend :
un tube de mesure (102, 202) destiné à guider le liquide (150), lequel tube présente une paroi de tube (110) qui s'étend entre une première ouverture de tube frontale et une deuxième ouverture de tube frontale et qui entoure un volume dans lequel le liquide doit être guidé, un axe de tube s'étendant entre la première ouverture de tube et la deuxième ouverture de tube ;
un premier conducteur (120, 126, 226) qui s'étend au moins par sections autour du volume dans lequel le liquide doit être guidé, le premier conducteur étant isolé électriquement par rapport au volume ;
un deuxième conducteur (114, 124, 224) qui s'étend au moins par sections autour du volume dans lequel le liquide (150) doit être guidé, le deuxième conducteur étant isolé électriquement par rapport au premier conducteur et par rapport au volume,
le premier conducteur (120, 126, 226) s'étendant pour l'essentiel parallèlement au deuxième conducteur (114, 124, 224), le premier conducteur (120, 126, 226) et le deuxième conducteur (114, 124, 224) formant un guide d'ondes pour micro-ondes ;
un circuit HF (182) destiné à injecter un signal micro-ondes dans le guide d'ondes et à recevoir des signaux micro-ondes réfléchis découplés du guide d'ondes ;
un circuit d'exploitation et d'évaluation (184), lequel circuit est conçu pour déterminer le niveau de liquide dans le tube de mesure (102, 202) à l'aide des signaux micro-ondes reçus.

2. Dispositif selon la revendication 1, pour lequel la paroi tubulaire (110) comprend un corps de support métallique (114) et un revêtement électriquement isolant (112), le corps de support (114) entourant le premier conducteur (120, 126) et le premier conducteur électrique (120, 126) étant isolé électriquement par rapport au volume et par rapport au corps de support (114) par le revêtement (112).

3. Dispositif selon la revendication 2, pour lequel le corps de support (114) entoure le deuxième conducteur (124), et pour lequel le deuxième conducteur électrique (124) est isolé électriquement par rapport au premier conducteur (126), au volume et au corps de support (114) par le revêtement (112).

4. Dispositif selon la revendication 2, pour lequel le deuxième conducteur comprend le corps de support (114), notamment est formé par le corps de support (114).

5. Dispositif selon la revendication 1, pour lequel la paroi tubulaire comprend un corps de paroi tubulaire (210) électriquement isolant, le guide d'ondes entourant le corps de paroi tubulaire et étant électriquement isolé du volume par le corps de paroi tubulaire (210).

6. Dispositif selon la revendication 5, pour lequel le premier conducteur (226) et le deuxième conducteur (224) sont fixés au corps de paroi tubulaire (210).

7. Dispositif selon la revendication 6, pour lequel le premier conducteur (226) et le deuxième conducteur (224) comprennent des bandes métalliques appliquées sur le corps de paroi tubulaire (210).

8. Dispositif selon l'une des revendications précédentes, pour lequel le guide d'onde s'étend pour l'essentiel perpendiculairement à l'axe du tube.

9. Dispositif selon l'une des revendications 1 à 7, pour lequel le guide d'onde s'étend en spirale autour du volume.

10. Dispositif selon l'une des revendications précédentes, pour lequel le circuit d'exploitation et d'évaluation (184) est conçu pour déterminer le niveau dans le tube de mesure à partir d'un ou plusieurs signaux réfléchis extraits du guide d'ondes.

11. Dispositif selon l'une des revendications précédentes, pour lequel le circuit RF est conçu pour injecter des signaux dans le guide d'ondes et les découpler du guide d'ondes selon le principe FMCW.

12. Débitmètre (100), comprenant :
un dispositif (101) destiné à la mesure du niveau selon l'une des revendications 1 à 11 ; un transducteur (103) destiné à la mesure de la vitesse d'écoulement d'un liquide s'écoulant dans le tube de mesure (102), le transducteur (103) étant disposé dans ou sur le tube de mesure (102) ; et
le circuit d'exploitation et d'évaluation (184) étant conçu pour déterminer le débit volumique à travers le tube de mesure (102) à l'aide de la vitesse d'écoulement et du niveau.

13. Débitmètre selon la revendication 12, pour lequel le transducteur (103) comprend un transducteur magnéto-inductif.

14. Débitmètre selon la revendication 12, pour lequel le circuit d'exploitation et d'évaluation (184) est conçu pour déterminer, à l'aide de signaux couplés à partir du guide d'ondes, des propriétés électriques ou diélectriques du liquide, et pour tenir compte de ces dernières lors de la détermination de la vitesse d'écoulement du liquide.
